# EUROPEAN PATENT APPLICATION

(11) **EP 4 726 656 A1**
(43) Date of publication of application: **15.04.2026**
(21) Application number: 24205273.6
(22) Date of filing: 08.10.2024
(51) Int. Cl.: G06T 7/73, A61B 17/70

(54) **OPTICAL TRACKER CONFIGURED TO EMIT OR REFLECT POLARIZED LIGHT**

(71) Applicant: Stryker European Operations Limited, Carrigtwohill, Co. Cork T45 HX08 (IE)
(72) Inventor: RIEGELSBERGER, Fabian, 79211 Denzlingen (DE); KOEPFF, Marvin, 79227 Schallstadt (DE); UMBDENSTOCK, Emeric, 00185 Roma (IT)
(74) Representative: Röthinger, Rainer

(57) **Abstract**

A technique for determining a pose of an optical tracker is presented. The optical tracker has at least one planar region configured to emit or reflect polarized light and an optical marker in a fixed spatial relation to the at least one planar region. A method implementation of the technique comprises receiving image data indicative of the marker and of polarizations of light received from the at least one planar region. The method further comprises determining, based on the image data and the fixed spatial relation between the marker and the at least one planar region, a pose of the optical tracker.

## Description

### Technical Field

The present disclosure generally relates to optical trackers. In particular, an optical tracker configured to emit or reflect polarized light, a system comprising the optical tracker, a method for determining a pose of the optical tracker, a computer program product and a data processing device are presented.

### Background

In navigated surgery and similar applications, optical trackers are used for determining positions of objects like a patient anatomy (e.g., a patient bone) or a surgical instrument. Based on the determined positions of multiple objects, relative positions between the objects may be calculated. Further, based on the relative positions, navigation instructions may be determined and used for navigation of, e.g., a surgical instrument held by a surgeon or by a robotic arm.

Optical trackers commonly comprise multiple optically detectable markers in the form of optically passive or active elements that can be captured by a camera system. For example, a passive optical tracker may comprise three or more spheres with reflective surfaces. In the case of an active tracker, the markers may comprise light emitting diodes (LEDs).

To be able to reliably determine the pose of an optical tracker in 6 degrees of freedom (DOF), the markers need to have a minimum distance from each other and at least three markers have to be visible to the camera system. As a result of these constraints, each tracker has a minimum size. In some implementations, this minimum size may lead to detrimental effects during surgery. For example, the tracker may be optically or mechanically obstructive. As a result, the view of surgeon may be obstructed and surgical access to a patient anatomy may become more difficult. Since in most surgical scenarios multiple optical trackers are used, the aforementioned problems are further increased, in particular for cases in which the surgeon has to work on relatively small or adjacent patient anatomies like a patient's vertebrae.

In such or other scenarios, it would also be desirable to increase at least one of tracking accuracy and versatility of the optical tracker.

### Summary

There is a need for an technique addressing at least some of the aforementioned or other problems. In particular, there is a need for an improved optical tracker.

According to a first aspect, a method for determining a pose of an optical tracker is provided. The optical tracker has at least one planar region configured to emit or reflect polarized light and an optical marker in a fixed spatial relation to the at least one planar region. The method comprises receiving image data indicative of the marker and of polarizations of light received from the at least one planar region. The method further comprises determining, based on the image data and the fixed spatial relation between the marker and the at least one planar region, a pose of the optical tracker.

In some variants, the image data may comprise first image data captured by at least one first camera configured to detect polarizations of light received from the at least one planar region. Additionally or alternatively, the image data may comprise second image data captured by at least one second camera configured to detect the optical marker.

The at least one first camera may have a fixed spatial relation to the at least one second camera. In such a case, the pose of the optical tracker may be further determined based on the fixed spatial relation between the at least one first camera and the at least one second camera. The fixed spatial relation may be known, e.g., based on pre-calibrated camera poses. The cameras may each comprise a tracker allowing to verify the pre-calibrated camera poses and thus the known fixed spatial relation. Additionally or in the alternative, the camera trackers may be used or to determine the poses of the first camera and the second camera and based thereon the fixed spatial relation (e.g., in case the spatial relation is not known).

In some variants, the pose of the optical tracker may be determined within a tracking coordinate system. The tracking coordinate system may be defined relative to (e.g., in a fixed geometric relationship with) at least one of the at least one first camera and the at least one second camera. As an example, the tracking coordinate system may be defined to have its origin in an optic center of the at least one second camera. In other implementations, the tracking coordinate system may be defined relative to a patient tracker or a tracker of a medical imaging device. In some variants, the tracking coordinate system may be a global coordinate system in or relative to which one or more local coordinate systems (e.g., of one or more of the optical trackers presented herein, with at least one planar region configured to emit or reflect polarized light) may be registered.

In some variants, a tracking system for generating the image data may comprise multiple first cameras. In some variants, the tracking system may comprise multiple second cameras. For example, the tracking system may comprise at least one optical stereo camera to capture the at least on optical marker and at least one polarization camera.

In some variants, determining the pose of the optical tracker may comprise determining, based on the image data, a position of the optical marker. The position may be determined within the tracking coordinate system (e.g., defined relative to at least one of the at least one first camera and the at least one second camera). Additionally, determining the pose of the optical tracker may comprises determining, based on the image data, a surface normal for the at least one planar region, and determining, based on the surface normal of the at least one planar region and the position of the optical marker, the pose of the optical tracker.

In some variants, based on a first surface normal of a first planar region, the marker position and the fixed spatial relation between the first planar region and the marker, the pose of the tracker may be determined in 5 DOF excluding one rotational DOF around a rotation axis parallel to the surface normal and running through the optical marker. The 6th DOF may be determined based on at least one of known camera positions, a known or determined starting position of a surface normal, and/or a second surface normal of a second planar region and a fixed spatial relation between the marker and the second planar region.

In particular, the orientation of the tracker may be determined based on the surface normal of the at least one planar region and the position of the tracker may be determined based on the position of the optical marker and the fixed spatial relation to the at least one planar region. For example, the optical marker is spaced apart from the at least one planar region at a known distance and position relative thereto. Determining the surface normal of the at least one planar region may be based on known techniques for determining a surface normal of an object based on polarization image data indicative of the object. Such techniques are described, for example, by Xue, F., Filin, S., and Jin, W.: "SHAPE RECONSTRUCTION OF HERITAGE ASSETS BY POLARIZATION INFORMATION", Int. Arch. Photogramm. Remote Sens. Spatial Inf. Sci., XLVIII-M-2-2023, 1653-1658, 2023 or in document W. Smith, R. Ramamoorthi and S. Tozza, "Height-from-Polarisation with Unknown Lighting or Albedo" in IEEE Transactions on Pattern Analysis & Machine Intelligence, vol. 41, no. 12, pp. 2875-2888, 2019. In detail, the surface normal of the at least one planar region may be determined based on diffuse reflection, specular reflection, or a combination thereof.

In some variants, the optical tracker may have at least two planar regions configured to emit or reflect polarized light. Determining the pose of the optical tracker may then comprise determining, based on the image data, a respective surface normal for the at least two planar regions, and determining, based on the surface normals, an orientation of the optical tracker. The pose of the optical tracker may then be determined based on the determined orientation of the optical tracker and the position of the optical marker.

Using optical trackers with multiple planar regions may increase at least one of the precision and the reliability of the determination of the tracker pose. In particular, providing a tracker with two planar regions allows a determination of the tracker pose in 6 DOF, as explained above. Providing a tracker with three or more planar regions may allow a determination based on multiple respective surface normals to increase the precision of the pose determination. Further, providing multiple planar regions may increase the flexibility regarding the positioning of the tracker relative to a camera system, since more positions are envisioned in which at least one planar region is in the field of view of a polarization camera.

In some variants, determining the surface normal for the at least one planar region or a respective surface normal for the at least two planar regions may comprise at least one of averaging of multiple surface normals determined for a particular one of the one or more planar regions and fitting a surface normal (e.g., pixel-by-pixel) to a basic model of the surface normal. The basic model may be based on known marker geometries. Averaging of multiple surface normals or fitting a surface normal to a basic model thereof may further increase the precision of the pose determination and may be performed based on known mathematical averaging and fitting techniques.

In some variants, the image data may be indicative of at least two optical trackers, each of the at least two optical trackers having at least two planar regions configured to emit or reflect polarized light, and an optical marker in a fixed spatial relation relative to the at least two planar regions. The orientations of the at least two planar regions relative to each other may be different for the optical trackers. For example, the two planar regions may have different angles relative to each other for the different optical trackers. The method may further comprise differentiating between (e.g., identifying) the optical trackers based at least in part on the orientation of the at least two planar regions of the respective trackers.

In some scenarios, providing optical trackers with different relative orientations between at least two planar regions thereof allows for an easy identification of the respective trackers. In some variants, each tracker may have a unique relative orientation of planar regions allowing for an unambiguous identification of the tracker based on the respective surface normals of the at least two planar regions.

In some variants, the image data may be indicative of at least two optical trackers, each of the at least two trackers having at least one planar region configured to emit or reflect polarized light and an optical marker in a fixed spatial relation relative to the at least one planar region. The planar regions may be color-coded and/or the optical markers may be active markers, wherein each active marker may have a unique emission characteristic (e.g., in regard to the emitted wavelength or in regard to a temporal emission pattern). The method may further comprise differentiating (e.g., identifying) the optical trackers based at least in part on the color-coded planar regions and/or the emission characteristics of the active markers. Additionally or alternatively to the color-coding, the regions may be coded based on optically discernable patterns.

The techniques for identifying the trackers as described herein may be combined to increase the reliability of the identification compared to using a single one of the identification techniques or to provide more flexibility to a user, i.e., by providing a choice of identification techniques to be used.

In some variants, the at least one planar region may be configured to reflect light emitted from a light source at a known location (e.g., known within the tracking coordinate system). In such an implementation, the step of determining the pose of the tracker may be based at least in part on the known position of the light source.

The light emitted from the light source may be unpolarized and may become polarized due to the reflection from the at least one planar region. The at least one region may thus comprise or be made of dielectric, i.e., non-metallic material.

According to a second aspect, a computer program product is provided. The computer program comprises instructions which, when the program is executed by a processor, cause the processor to carry out the steps of any variant of the method described herein.

According to a third aspect, a data processing device is provided. The device comprises a processor configured to perform the steps of any variant of the method described herein.

According to a fourth aspect an optical tracker is provided. The tracker comprises at least one planar region configured to emit or reflect polarized light and an optical marker in a fixed spatial relation relative to the at least one planar region.

The optical marker may be an optically passive (e.g., light reflecting) or an optically active (e.g., light emitting) element. In one implementation, the optical tracker comprises only a single optical marker. The single optical marker may be arranged in a central portion of the optical tracker. In other implementations, the optical tracker may comprise two, three, four or more optical markers spaced apart from each other.

In some variants, the at least one planar region may comprise (e.g., may be made of) dielectric material so that the reflected light may become polarized due to the reflection.

In some variants, the optical tracker may comprise at least two (e.g., two, three or four) planar regions configured to emit or reflect polarized light, the at least two planar regions having different orientations. Optionally, the orientations of the at least two planar regions may differ between 5 and 30 degrees, e.g., relative to the marker. Additionally or alternatively, the at least two planar regions are adjacent to each other, thus allowing a compact tracker design.

In some variants, the optical tracker may further comprise an interface configured to couple the optical tracker to a surgical object. For example, the interface may be a clamp or an adhesive. In other examples, the interface may comprise a thread configured to engage with a counter-thread or to receive a screw. In general, the interface may be any known interface for attaching a tracker to an object. The interface may be in a fixed spatial relation to the optical marker and thus also the at least one planar surface. The fixed spatial relation may be known based on manufacturing data.

According to a fifth aspect, a tracking system comprising at least two optical trackers as described herein is provided. At least one of the following tracker differentiation criteria is implemented in the tracking system: i) each of the at least two optical trackers has at least two planar regions configured to emit or reflect polarized light, wherein orientations of the at least two planar regions relative to each other are different for the at least two optical trackers, ii) the optical marker of each of the at least two optical trackers is an active marker, wherein the optical markers of the at least two optical trackers have different emission characteristics, and iii) the at least one planar region of each of the at least two optical trackers is color-coded, wherein the color-coding of the respective planar region is different for the at least two optical trackers. Of course, two or more of these criteria can be combined as needed.

According to a sixth aspect, a tracking system is provided. The tracking system comprises an optical tracker as described herein, a first camera configured to detect polarizations of light reflected from the at least one planar region, and a second camera configured to detect the optical marker.

The system may further comprise a light source configured to emit light towards the at least one planar surface. The light source may be located at a distance from the tracker that is multiple times larger than the dimensions of the tracker, so that the light source may approximately be assumed as a point light source when determining the surface normal based on light emitted by the light source and reflected by the at least one planar region. The light source may be configured to emit unpolarized light.

### Brief Description of the Drawings

Further details, advantages and aspects of the present disclosure will become apparent from the following embodiments taken in conjunction with the drawings, wherein:
- Fig. 1: shows a tracking system comprising multiple optical trackers and multiple cameras;
- Fig. 2: shows a first optical tracker of Fig. 1 in detail;
- Fig. 3: shows a second optical tracker of Fig. 1 in detail; and
- Fig. 4: shows a flow diagram of a method for determining a pose of an optical tracker.

### Detailed Description

In the following description of exemplary embodiments, the same reference numerals are used to denote the same or similar components.

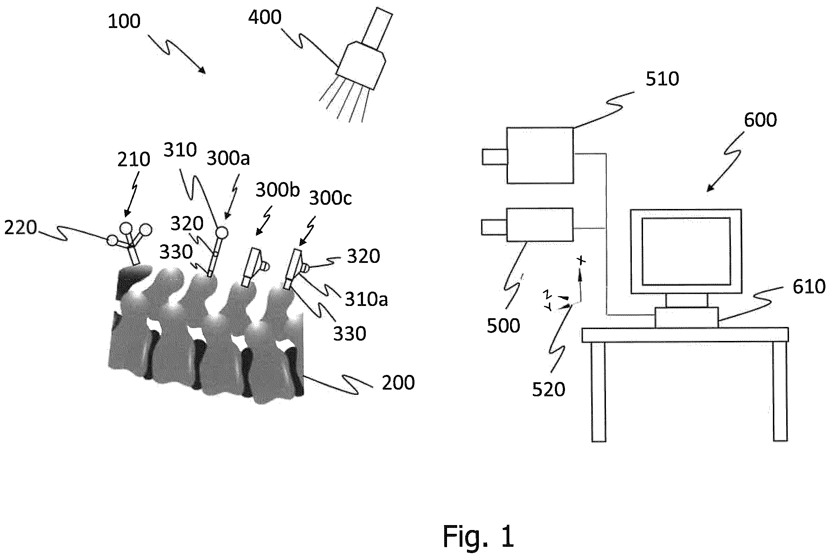

Fig. 1 shows an embodiment of a tracking system 100. The tracking system 100 of Fig. 1 comprises an object to be tracked. In the shown example, the object is a patient having a spine 200 comprising multiple vertebrae that are to be tracked for the purpose of a navigated spinal intervention. In other examples, other objects may be tracked. In particular, each object to which a tracker is attachable to may be tracked.

The system 100 comprises multiple optical trackers 210, 300a, 300b, 300c attached to the patient. The dimensions of the trackers 210, 300a, 300b, 300c may not be representative of the real dimensions of the trackers 210, 300a, 300b, 300c and are chosen for illustrative purposes.

The various optical trackers 210, 300a, 300b, 300c illustrated in Fig. 1 comprise a single optical patient tracker 210 with three or more optical markers 220 and multiple optical vertebra trackers 300a, 300b, 300c. In the illustration of Fig. 1, the patient tracker 210 is shown as being attached to a vertebra. In other implementations, the patient tracker 210 may be attached to a patient's skin in a vicinity of the spine 200, e.g., as a frame within which the optical vertebra trackers 300a, 300b, 300c are provided (such as Stryker's SpineMask^{®}).

Each of the optical vertebra trackers 300a, 300b, 300c comprises at least one planar region 310, a single optical marker 320 with a fixed spatial relation to the at least one planar region 310, and an interface 330 configured for attaching each of the trackers 300a, 300b, 300c to the object 200 to be tracked (here: a vertebra). In the present configuration, the interface 330 is configured as a clamp configured to the attached to the spinous process.

The at least one planar region 310 of the trackers 300a, 300b, 300c shown in Fig. 1 can be made of dielectric material and configured to reflect light emitted from a light source 400 comprised by the system 100. The light emitted by the light source 400 may be unpolarized light and become polarized due to the reflection at the at least one planar region 310. The light emitted by the light source 400 may be visible light or infrared light.

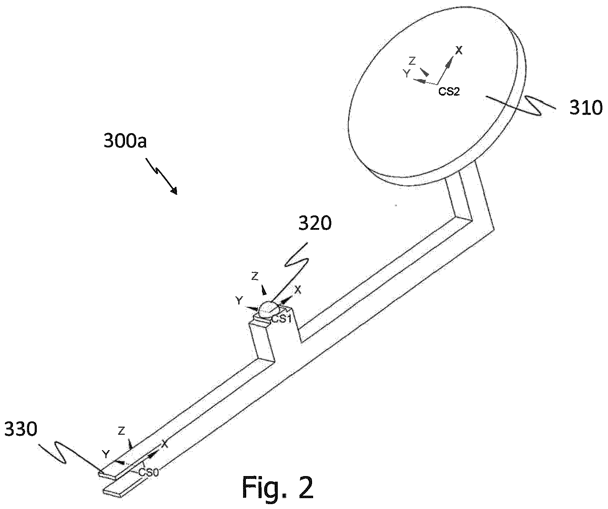

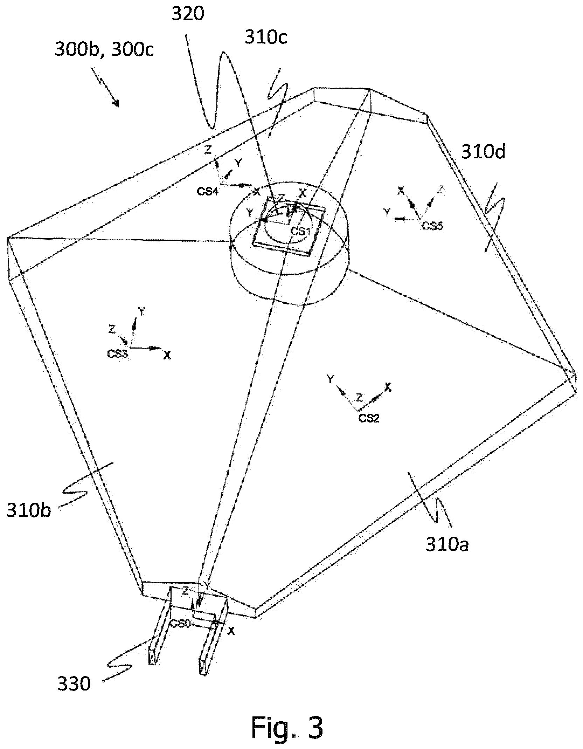

Different variants of the trackers 300a, 300b, 300c comprising at least one planar region 310 and a single optical marker 320 with a fixed spatial relation to the at least one planar region 310 are shown in detail in Figs. 2 and 3.

In Fig. 2, a first embodiment of an optical tracker 300a is shown comprising a single planar region 310, a single optical marker 320 and an interface 330 configured for attaching the tracker 300a to an object to be tracked. It is to be noted that the interface 330 is only schematically illustrated and may be realized in accordance with the shape of the surgical object to which is will be attached.

As becomes apparent from Fig. 2, the planar region 310, the single optical marker 320 and the interface 330 are spaced apart from and in fixed spatial relations to each other. Each of the planar region 310, the marker 320 and the interface 330 defines a respective coordinate system CS0 to CS2 as illustrated in Fig. 3, with an origin of the respective coordinate system CS0 to CS2 being located in a center of the planar region 310, the marker 320 and the interface 330. Due to the fixed (and known) spatial relations, only one of the coordinate systems CS0 to CS2 may need to be registered, as a local coordinate system, with or within a global (e.g., a tracking) coordinate system to enable the tracker 300a to be used for tracking and/or navigation applications.

In the variant of Fig. 2, the optical marker 320 is a reflective marker and located approximately in the middle between the planar region 310 and the interface 330. The optical marker 320 is specifically configured to reflect light in the infrared spectrum. This light may be generated by the light source 400 illustrated in Fig. 1 or a separate light source. The separate light source may be configured to emit light in the infrared spectrum. In some variants, for example, the separate light source may be configured to emit light in the same spectrum as the light source 400 illustrated in Fig. 1. In other variants the separate light source and the light source 400 illustrated in Fig. 1 may be configured to emit light in different spectra.

In Fig. 3, a second embodiment of an optical tracker 300b, 300c is shown. The second optical tracker 300b, 300c differs from the first optical tracker 300a in that the second optical tracker 300b, 300c comprises more than one, namely four planar regions 310a, 310b, 310c, 310d. Each of the planar regions 310a, 310b, 310c, 310d is located adjacent to two other of the planar regions 310a, 310b, 310c, 310d. The planar regions 310a, 310b, 310c, 310d are angled relative to each other. The angles between the planar regions 310a, 310b, 310c, 310d may be chosen so that each of the regions 310a, 310b, 310c, 310d defines a unique surface normal. For different trackers 300b, 300c, the respective angles between the planar regions 310a, 310b, 310c, 310d may differ so that the trackers 300b, 300c may be differentiated (and possibly uniquely identified) based on the respective angles between the planar regions 310a, 310b, 310c, 310d. Further, each of the planar regions 310a, 310b, 310c, 310d shown on Fig. 3 defines a respective coordinate system CS2 to CS5.

A single passive (i.e., reflective) optical marker 320 is located in the center of the optical tracker 300b, 300c and surrounded by the planar regions 310a, 310b, 310c, 310d. There exists a fixed (and known) spatial relation between the marker 320 and the planar regions 310a, 310b, 310c, 310d. This fixed spatial relation may be defined between the origins of the respective coordinate systems CS1 to CS5. These origins may be defined to lie in the geometric center of each of the marker 320 and the planar regions 310a, 310b, 310c, 310d.

Other configurations of planar regions 310a, 310b, 310c, 310d that differ from the configuration shown in Fig. 3 are contemplated. In particular, at least one of a different number of planar regions 310a, 310b, 310c, 310d, different geometries of the planar regions 310a, 310b, 310c, 310d, and different orientations of planar regions 310a, 310b, 310c, 310d relative to each other may be chosen for differentiating different optical trackers 300b, 300c. For example, a tracker (not shown) may comprise two or more planar regions 310, 310a, 310b, 310c, 310d arranged in a row. Further, the planar regions may be optically coded by color and/or an optical pattern (not shown).

Returning to Fig. 1, the system 100 further comprises at least one first camera 500 and at least one second camera 510. The at least one first camera 500 is a stereo camera configured for tracking the optical markers 320 of the trackers 210, 300a, 300b, 300c, for example in the infrared spectrum. The second camera 510 is a polarization camera configured for detecting the polarized light reflected from (or actively emitted by) the planar regions 310, 310a, 310b, 310c, 310d. Also illustrated in Fig. 1 is a tracking coordinate system 520 in which the at least one first camera 500 tracks the optical markers 220, 320. In some variants, the tracking coordinate system 520 has its origin in an optical center of the at least one first camera 500.

The at least one first camera 500 and the at least one second camera 510 are communicatively connected to a computing device 600 comprised by the tracking system 100. The computing system 600 comprises a processor 610 configured to receive image data generated by the at least one first camera 500 and the at least one second camera 510 and indicative of the optical markers 220, 320 and the polarization of the light reflected or emitted from the planar surfaces 310, 310a, 310b, 310c, 310d. In the shown example, the cameras 500, 510 are directly connected to the computing device 600. In other variants, the cameras 500, 510 may be connected to a server, a cloud or any other data storage device and the computing device 600 may receive the image data from the server, the cloud, or the other data storage device.

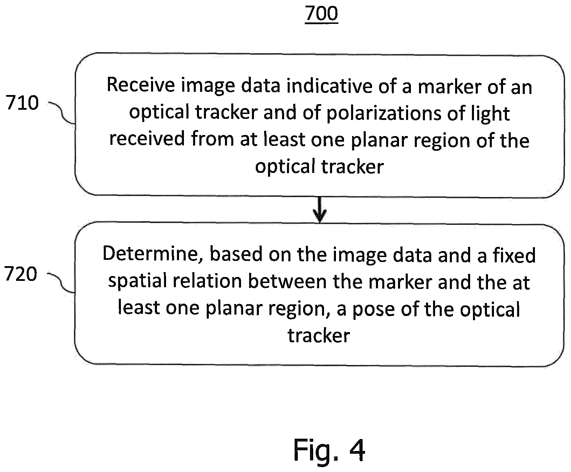

The computing device 600 may process the received image data for determining a pose of at least one of the optical trackers 300a, 300b, 300b will now be discussed with reference to Fig. 4. Fig. 4 shows a flow diagram 700 of a method for determining a pose of the optical tracker 300a, 300b, 300c as shown in Figs. 2 and 3.

In step 710, the method comprises receiving image data indicative of a marker 320 and of polarizations of light received from at least one planar region 310, 310a, 310b, 310c, 310d. The image data may have been generated by the at least one first camera 500 and the at least one second camera 510 as explained above with reference to Fig. 1.

In step 720, the method comprises determining, based on the received image data and the fixed spatial relation between the marker 320 and the at least one planar region 310, 310a, 310b, 310c, 310d, a pose of the optical tracker 300a, 300b, 300c.

To determine the pose of the optical tracker 300a, 300b, 300c, the computing device 600 determine a respective surface normal for each of the planar regions 310, 310a, 310b, 310c, 310d based on the image data received from the second camera 510. The respective surface normals may be determined based on known mathematical techniques as described above. To increase the accuracy of the determination of a respective surface normal, multiple surface normals may be determined initially, e.g., at different positions of a respective planar region (e.g., at different pixels in the image data), and averaged. Additionally or alternatively, a surface normal may be fitted pixel-by-pixel to a model of the surface normal. The model may be previously known, e.g., based on manufacturing data.

The surface normal may be determined in the coordinate system defined by the respective planar region(s). The respective coordinate system(s) may then be registered with the tracking coordinate system 520, e.g., a coordinate system defined based on a position of one of the cameras 500, 510, wherein the cameras 500, 510 may have a known fixed spatial relation to each other.

Further, the position of a particular optical marker 320 (i.e., of its coordinate system CS1) may be determined based on the image data received from the first camera 500 and within the tracking coordinate system 520. The registrations between any coordinate systems described herein may be based on common image registration techniques known in the art.

The pose of a respective optical tracker 300a, 300b, 300c may then be determined in the tracking coordinate system 520 based on the respective one or more surface normals, the position of the marker 320 and the fixed spatial relations between the marker 320 and each of the one or more planar regions 310, 310a, 310b, 310c, 310d. For example, the position of the respective tracker 300a, 300b, 300c may be determined based on the position of its marker 320 and its orientation may be unambiguously determined based on at least one of the orientations of at least two associated surface normals or based on the orientation of one surface normal together with a predefined or determined camera position or a starting position of the surface normal within the tracking coordinate system 520.

As has become apparent from the above description of exemplary realizations of the present disclosure, a pose of a tracker 300a, 300b, 300c can accurately be determined based on image data indicative of the polarization of light reflected from a planar surface of the tracker 300a, 300b, 300c and on the position of in particular less than three, e.g., a single optical marker 320 per tracker 300a-c. Since multiple markers are no longer necessarily needed, the trackers 300a-c described herein may become more compact than conventional optical trackers with three of more spaced apart optical markers. As such, the optical and mechanical obstructions inherent to conventional optical trackers can be reduced, which has various advantages. For example, access to a surgical site may be improved and accidental mechanical collisions with markers 320 may be reduced. As a result, the number of re-registrations may be reduced, which may lead to a reduced duration of a surgery and thus to a reduced health risk for a patient. Further a surgeon may have a better view of a surgical site when using the optical trackers 300a-c, which may also reduce the health risk for the patient.

In sum, the technique presented herein allows determining a tracker pose in 6 DOF with high accuracy, even if only one optical marker 320 and the at least one planar region 310, 310a-d are visible to a camera system 500 configured for generating the received image data. As a result, the optical tracker 300a-c may have a more compact design compared to existing optical trackers having at least three optical markers so that an optical and mechanical obstruction due to the use of one or more trackers is reduced.

While the present invention has been described with reference to exemplary embodiments, the invention can also be implemented in different forms.

## Claims

1. A method (700) for determining a pose of an optical tracker (300a, 300b, 300c), the optical tracker having at least one planar region (310; 310a, 310b, 310c, 310d) configured to emit or reflect polarized light and an optical marker (320) in a fixed spatial relation to the at least one planar region, the method comprising:
receiving (710) image data indicative of the marker and of polarizations of light received from the at least one planar region;
determining (720), based on the image data and the fixed spatial relation between the marker and the at least one planar region, a pose of the optical tracker.

2. The method (700) according to claim 1, wherein
the image data comprise first image data captured by at least one first camera (500) configured to detect polarizations of light received from the at least one planar region (310; 310a, 310b, 310c, 310d).

3. The method (700) according to claim 1 or 2, wherein
the image data comprise second image data captured by at least one second camera (510) configured to detect the optical marker (320).

4. The method (700) according to claims 2 and 3, wherein
the at least one first camera (500) has a fixed spatial relation to the at least one second camera (510), and wherein the pose of the optical tracker (300a, 300b, 300c) is further determined based on the fixed spatial relation between the at least one first camera and the at least one second camera.

5. The method (700) according to any of claims 2 to 4, wherein
the pose of the optical tracker (300a, 300b, 300c) is determined within a tracking coordinate system (520).

6. The method (700) according to any preceding claim, wherein
determining the pose of the optical tracker (300a, 300b, 300c) comprises determining, based on the image data, a position of the optical marker (320).

7. The method (700) according to claim 6, wherein
determining the pose of the optical tracker (300a, 300b, 300c) comprises:
determining, based on the image data, a surface normal for the at least one planar region (310; 310a, 310b, 310c, 310d); and
determining, based on the surface normal of the at least one planar region (310; 310a, 310b, 310c, 310d) and the position of the optical marker (320), the pose of the optical tracker.

8. The method (700) according to claim 6 or 7, wherein
the optical tracker (300a, 300b, 300c) has at least two planar regions (310; 310a, 310b, 310c, 310d) configured to emit or reflect polarized light, and wherein determining the pose of the optical tracker comprises:
determining, based on the image data, a respective surface normal for the at least two planar regions;
determining, based on the surface normals, an orientation of the optical tracker; and
determining, based on the orientation of the optical tracker and the position of the optical marker (320), the pose of the optical tracker.

9. The method (700) according to claim 7 or 8, wherein
determining the surface normal for the at least one planar region (310; 310a, 310b, 310c, 310d) or a respective surface normal for the at least two planar regions comprises at least one of:
averaging of multiple surface normals determined for a particular one of the one or more planar regions; and
fitting a surface normal to a basic model of the surface normal.

10. The method (700) according to any one of claims 1 to 9, wherein
the image data are indicative of at least two optical trackers (300a, 300b, 300c), each of the at least two optical trackers having at least two planar regions (310; 310a, 310b, 310c, 310d) configured to emit or reflect polarized light and an optical marker (320) in a fixed spatial relation relative to the at least two planar regions, wherein orientations of the at least two planar regions relative to each other are different for the optical trackers, the method further comprising:
differentiating the optical trackers based at least in part on the orientation of the at least two planar regions of the respective trackers.

11. The method (700) according to any one of claims 1 to 10, wherein
the image data are indicative of at least two optical trackers (300a, 300b, 300c), each of the at least two trackers having at least one planar region (310; 310a, 310b, 310c, 310d) configured to emit or reflect polarized light and an optical marker (320) in a fixed spatial relation relative to the at least one planar region, wherein the planar regions are color-coded and/or the optical markers are active markers, wherein each active marker has a unique emission characteristic, the method further comprising:
differentiating the optical trackers based at least in part on the color-coded planar regions and/or the emission characteristics of the active markers.

12. The method (700) of any preceding claims, wherein
the at least one planar region (310; 310a, 310b, 310c, 310d) is configured to reflect light emitted from a light source at a known location; and
wherein the step of determining the pose of the tracker is based at least in part on the known position of the light source.

13. A computer program product comprising instructions which, when the program is executed by a processor, cause the processor to carry out the steps of the method (700) of any of claims 1 to 12.

14. A data processing device comprising a processor configured to perform the steps of the method (700) of any of claims 1 to 12.

15. An optical tracker (300a, 300b, 300c), comprising:
at least one planar region (310; 310a, 310b, 310c, 310d) configured to emit or reflect polarized light; and
an optical marker (320) in a fixed spatial relation relative to the at least one planar region.

16. The optical tracker (300a, 300b, 300c) according to claim 15, wherein the at least one planar region (310; 310a, 310b, 310c, 310d) comprises a dielectric material.

17. The optical tracker (300a, 300b, 300c) according to claim 15 or 16, wherein
the optical tracker comprises at least two planar regions (310; 310a, 310b, 310c, 310d) configured to emit or reflect polarized light, the at least two planar regions having different orientations; and/or wherein
the at least two planar regions are adjacent to each other.

18. The optical tracker (300a, 300b, 300c) according to any of claims 15 to 17, further comprising
an interface configured to couple the optical tracker to a surgical object.

19. A tracking system comprising at least two optical trackers (300a, 300b, 300c) according to any of claims 15 to 18, wherein at least one of the following tracker differentiation criteria is implemented:
i) each of the at least two optical trackers has at least two planar regions (310; 310a, 310b, 310c, 310d) configured to emit or reflect polarized light, wherein orientations of the at least two planar regions relative to each other are different for the at least two optical trackers;
ii) the optical marker (320) of each of the at least two optical trackers is an active marker, wherein the optical markers of the at least two optical trackers have different emission characteristics; and
iii) the at least one planar region of each of the at least two optical trackers is color-coded, wherein the color-coding of the respective planar region is different for the at least two optical trackers.

20. A tracking system comprising:
an optical tracker (300a, 300b, 300c) according to any of claims claim 15 to 18;
a first camera (500) configured to detect polarizations of light reflected from the at least one planar region (310; 310a, 310b, 310c, 310d); and
a second camera (510) configured to detect the optical marker (320).
